(19) Europäisches Patentamt / European Patent Office / Office européen des brevets

(11) **EP 3 640 893 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
***G06T 11/00*** *(2006.01)*

(21) Anmeldenummer: **18200946.4**

(22) Anmeldetag: **17.10.2018**

(54) **VERFAHREN ZUR REKONSTRUKTION EINES DREIDIMENSIONALEN ERGEBNISBILDDATENSATZES**

METHOD OF RECONSTRUCTING A THREE-DIMENSIONAL OUTCOME IMAGE DATA SET

PROCÉDÉ DE RECONSTRUCTION D'UN ENSEMBLE D'ENREGISTREMENT D'IMAGE RÉSULTANTE TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.04.2020 Patentblatt 2020/17**

(73) Patentinhaber: **Siemens Healthcare GmbH 91052 Erlangen (DE)**

(72) Erfinder:
• **Huang, Yixing**
  **91056 Erlangen (DE)**
• **Lauritsch, Günter**
  **90427 Nürnberg (DE)**
• **Manhart, Michael**
  **90765 Fürth (DE)**
• **Preuhs, Alexander**
  **81739 München (DE)**

(56) Entgegenhaltungen:
**US-A1- 2012 177 267**

• **GUANG-HONG CHEN ET AL: "Prior image constrained compressed sensing (PICCS): a method to accurately reconstruct dynamic CT images from highly undersampled projection data sets", MEDICAL PHYS, AIP, MELVILLE, NY, US, Bd. 35, Nr. 2, Februar 2008 (2008-02), Seiten 660-663, XP007907066, ISSN: 0094-2405, DOI: 10.1118/1.2836423**
• **HEUSSER THORSTEN ET AL: "Prior-based artifact correction (PBAC) in computed tomography", MEDICAL PHYSICS, AIP, MELVILLE, NY, US, vol. 41, no. 2, 23 January 2014 (2014-01-23), XP012181017, ISSN: 0094-2405, DOI: 10.1118/1.4851536**

EP 3 640 893 B1

**Beschreibung**

Die Erfindung betrifft ein Verfahren zur Rekonstruktion eines dreidimensionalen Ergebnisbilddatensatzes, insbesondere einer Computertomographie, aus mehreren zweidimensionalen Abbildungen, insbesondere aus Röntgenaufnahmen, die ein Untersuchungsobjekt aus einem jeweiligen Abbildungswinkel abbilden, wobei die Abbildungswinkel aller Abbildungen in einem eingeschränkten Winkelbereich liegen. Daneben betrifft die Erfindung eine Verarbeitungseinrichtung, ein Computerprogramm, einen elektronisch lesbaren Datenträger sowie eine Röntgeneinrichtung.

Im Bereich der Computertomographie, jedoch auch in anderen Anwendungsbereichen der insbesondere medizinischen Bildgebung, ist es häufig gewünscht, dreidimensionale Volumendatensätze aus mehreren zweidimensionalen Abbildungen zu rekonstruieren. Hierbei können beispielsweise zu Erstellung einer Computertomographie eine Röntgenquelle und ein Röntgendetektor gemeinsam um eine Achse rotiert werden, um ein Untersuchungsobjekt, beispielsweise einen zu untersuchenden Patienten, aus verschiedenen Abbildungswinkeln abzubilden. Werden Abbildungen für ausreichend viele Abbildungswinkel, die über einen ausreichend großen Winkelbereich verteilt sind, erfasst, so können dreidimensionale Bilddatensätze mit hoher Qualität rekonstruiert werden.

In einigen Anwendungsfällen, beispielsweise wenn ein C-Bogen zur Bilderfassung genutzt werden soll, oder wenn aus anderen Gründen die verfügbaren Aufnahmewinkel eingeschränkt sind, beispielsweise wenn eine Bildgebung operationsbegleitend erfolgen soll, können bei der Rekonstruktion von dreidimensionalen Bilddatensätzen aus den in diesem eingeschränkten Winkelbereich erfassten Abbildungen starke Artefakte resultieren, die eine Auswertung des resultierenden Bilddatensatzes erschweren oder gar unmöglich machen können. Entsprechende Artefakte sind besonders stark ausgeprägt, wenn relativ einfache Rekonstruktionsalgorithmen, beispielsweise eine gefilterte Rückprojektion, verwendet werden. Wie jedoch beispielsweise der Veröffentlichung J. Gu et al., "Multi-Scale Wavelet Domain Residual Learning for Limited-Angle CT Reconstruction", arXiv:1703.01382v1 [cs.CV], 4. März 2017, zu entnehmen ist, können jedoch auch rechenaufwändigere iterative Rekonstruktionsverfahren aus einem eingeschränkten Winkelbereich der Abbildungswinkel resultierende großflächige Artefakte typischerweise nicht aus dem rekonstruierten Bilddatensatz entfernen. Daher schlägt diese Druckschrift vor, ein Verfahren des Maschinenlernens zu nutzen, um entsprechende Artefakte zu erkennen und aus dem rekonstruierten Bilddatensatz zu entfernen.

Während mit diesem Ansatz eine sehr gute Unterdrückung von Artefakten erreicht werden kann, ist es bei einer Nutzung von Verfahren des Maschinenlernens problematisch, dass unter bestimmten Umständen schon kleine Störungen des Bildes, beispielsweise mit bloßem Auge kaum wahrnehmbare Rauschmuster, zu einem unerwarteten Verhalten des Algorithmus führen können. Diese Problematik wird beispielsweise in der Veröffentlichung von C. Szegedy et al., "Intriguing properties of neural networks", arXiv:1312.6199v4 [cs.CV], 19. Februar 2014, diskutiert. Diese Eigenschaft von Algorithmen, die durch ein Maschinenlernen trainiert wurden, kann unter Umständen dazu führen, dass bereits geringe Bildstörungen, beispielsweise ein niemals vollständig vermeidbares Bildrauschen, zu einer potentiellen Fehlklassifikation eines tatsächlich vorhandenen Merkmals als Artefakt führen könnte, womit bei einer Nutzung von Verfahren des Maschinenlernens zur Artefaktreduktion nicht ausgeschlossen werden kann, dass auch großflächige oder deutlich erkennbare Merkmale als Artefakte fehlklassifiziert und entfernt werden.

Die Patentschrift US 2012/177267 A1 offenbart eine Methode zur Erzeugung eines störungsarmen dreidimensionalen Bildes unter Verwendung eines rekonstruierten dreidimensionalen Vorbildes.

Die Veröffentlichung HEUSSER THORSTEN ET AL: "Prior-based artifact correction (PBAC) in computed tomography",MEDICAL PHYSICS, AIP, MELVILLE, NY, US, Bd. 41, Nr. 2 , XP012181017, ISSN: 0094-2405, DO1: 10.1118/1.4851536 offenbart eine Methode zur Artefakt-Korrektur bei Computed Tomography Bildern. Die Methode basiert darauf, zusätzlich zu den zu korrigierenden Bildern zuvor aufgenommene CT Bilddaten heranzuziehen. Der Erfindung liegt somit die Aufgabe zugrunde, eine Möglichkeit anzugeben, dreidimensionale Bilddatensätze aus Abbildungen zu rekonstruieren, die insbesondere über einen eingeschränkten Winkelbereich aufgenommen worden sein können, wobei hieraus resultierende Bildartefakte vermieden oder zumindest weitgehend reduziert werden sollen, während zugleich vermieden werden soll, dass tatsächlich in den Bilddaten der Abbildungen vorhandene Merkmale verworfen werden.

Die Aufgabe wird erfindungsgemäß durch ein Verfahren gemäß Patentanspruch 1 gelöst.

Der Erfindung liegt die Idee zugrunde, einen Algorithmus zur Reduktion von Artefakten nicht direkt zu nutzen, um einen Ergebnisbilddatensatz einer Rekonstruktion bereitzustellen. Stattdessen wird vorgeschlagen, einen artefaktreduzierten Bilddatensatz, der mithilfe dieses Algorithmus ermittelt wurde, als Zusatzinformation zu nutzen, die im Rahmen der Rekonstruktion zusätzlich zu den zweidimensionalen Abbildungen genutzt wird. Hierdurch kann einerseits durch die Berücksichtigung der tatsächlichen Bilddaten der zweidimensionalen Abbildungen sichergestellt werden, dass dort abgebildete Merkmale nicht versehentlich verworfen werden. Zugleich ermöglicht die Nutzung des artefaktreduzierten Bilddatensatzes als Zusatzinformation jedoch eine deutliche Reduzierung von Bildartefakten gegenüber einer Rekonstruktion des Ergebnisbilddatensatzes ausschließlich aus den zweidimensionalen Abbildungen ohne Nutzung eines Algorithmus zur Reduktion von Artefakten.

Die Nutzung des artefaktreduzierten Bilddatensatzes im Rahmen der Rekonstruktion ist auf vielfältige Weise möglich. Beispielsweise kann der artefaktreduzierte Bilddatensatz genutzt werden, um durch eine Vorwärtsprojektion bzw. eine Simulation der Abbildung künstliche zweidimensionale Abbildungen für Abbildungswinkel zu generieren, die außerhalb eines eingeschränkten Winkelbereiches liegen. Es ist jedoch auch möglich, den artefaktreduzierten Bilddatensatz zur Initialisierung von iterativen Rekonstruktionsverfahren oder im Rahmen der Iteration bei solchen Verfahren zu nutzen. Diese Möglichkeiten werden später noch detailliert erläutert werden.

Das Verfahren kann zusätzlich die Erfassung der zweidimensionalen Abbildungen des Untersuchungsobjekts umfassen. Das Untersuchungsobjekt kann beispielsweise ein Patient sein, wobei die Abbildungen insbesondere im Rahmen einer medizinischen Bildgebung erfasst werden können. Die Erfassung der Abbildungen kann mithilfe eines Röntgendetektors erfolgen, wobei beispielsweise in C-Bogen-Detektor, insbesondere ein Flat-Panel-Detektor, verwendet werden kann. Der Winkelbereich, innerhalb dem die Abbildungswinkel aller Abbildungen liegen, kann beispielsweise kleiner als die Summe aus 180° und dem genutzten Fächerwinkel, insbesondere kleiner als 200°, sein.

Als Algorithmus zur Reduktion von Artefakten kann ein Algorithmus verwendet werden, der durch ein Verfahren des Maschinenlernens trainiert ist oder wird. Beispielsweise kann ein neuronales Netz trainiert werden. Hierbei kann insbesondere ein überwachtes Lernen erfolgen, bei dem ein Lernen anhand von Trainingsdatensätzen erfolgt. Die Trainingsdatensätze können eine Vielzahl von Sollausgaben des Algorithmus und jeweilige Eingangsdaten umfassen. Hierbei ist es möglich, dass der Algorithmus derart trainiert wird, dass unmittelbar ein artefaktreduzierter Bilddatensatz generiert wird. Es ist jedoch auch möglich, dass, wie beispielsweise in der eingangs zitierten Veröffentlichung von J. Gu et al., der Algorithmus des Maschinenlernens die in einem rekonstruierten Bilddatensatz enthaltenen Artefakte erkennt, so dass diese anschließend, beispielsweise durch eine Subtraktion eines entsprechenden Datensatzes, aus dem rekonstruierten Bilddatensatz entfernt werden können.

Trainingsdatensätze zum Trainieren des Algorithmus können beispielsweise bereitgestellt werden, indem für jeden Trainingsdatensatz zunächst zweidimensionale Abbildungen über einen ausreichend großen Winkelbereich, beispielsweise über einen Winkelbereich von 200°, erfasst bzw. bereitgestellt werden, um eine im Wesentlichen artefaktfreie Rekonstruktion zu ermöglichen. Beispielsweise können entsprechende zweidimensionale Abbildungen durch einen Computertomographen gewonnen werden. Hierbei können zunächst alle zweidimensionalen Abbildungen genutzt werden, um einen Referenzbilddatensatz zu generieren, der als Sollausgabe des Algorithmus vorgegeben werden kann. Anschließend können alle zweidimensionalen Abbildungen verworfen werden, die außerhalb des eingeschränkten Winkelbereichs liegen, um durch eine Rekonstruktion, die nur Eingangsdaten aus dem eingeschränkten Winkelbereich berücksichtigt, Eingangsdaten für den jeweiligen Trainingsdatensatz zu generieren.

Als Verarbeitungsergebnis der Verarbeitung der zweidimensionalen Abbildungen kann ein dreidimensionaler vorläufiger Bilddatensatz rekonstruiert werden, der durch den Algorithmus zur Reduktion von Artefakten weiterverarbeitet wird, um den artefaktreduzierten Bilddatensatz bereitzustellen. Der vorläufige Bilddatensatz kann beispielsweise durch eine gefilterte Rückprojektion der zweidimensionalen Abbildungen generiert werden. Es können jedoch auch komplexere Rekonstruktionsverfahren, beispielsweise iterative Rekonstruktionsverfahren, verwendet werden.

Zur Rekonstruktion des Ergebnisbilddatensatzes kann ein iteratives Rekonstruktionsverfahren verwendet werden, wobei in jedem Iterationsschritt ein angenommener Bilddatensatz in Abhängigkeit der Abbildungen des Untersuchungsobjekts verändert wird. Iterative Rekonstruktionsverfahren sind an sich im Stand der Technik bekannt und sollen daher nicht detailliert erläutert werden. Eine detaillierte Diskussion iterativer Rekonstruktionsverfahren und ihrer Nutzung im Bereich des "compressed sensing" ist beispielsweise der Veröffentlichung G.-H. Chen et al., "Prior Image constrained compressed sensing (PICCS): A method to accurately reconstruct dynamic CT Images from highly undersampled projection data sets", Med. Phys. 35 (2), S. 660, Februar 2008, zu entnehmen.

Iterative Rekonstruktionsverfahren nutzen aus, dass im Bereich der medizinischen Bildgebung rekonstruierte Bilddatensätze typischerweise dünn besetzt sind bzw. durch entsprechende Transformationen, beispielsweise durch eine diskrete Gradiententransformation oder eine Wavelet-Transformation, in dünn besetzte Datensätze überführbar sind. Hierdurch kann eine Rekonstruktion mit weniger Eingangsdaten, also beispielsweise auch dann, wenn nur für einen eingeschränkten Winkelbereich Abbildungen vorliegen, mit erheblich verbesserter Qualität erreicht werden. Zudem sind, wie im Folgenden noch erläutert werden wird, iterative Rekonstruktionsverfahren gut geeignet, um ein Vorwissen in Form eines artefaktreduzierten Bilddatensatzes zu nutzen.

Die Verarbeitungsgeschwindigkeit und potentiell auch das Ergebnis von iterativen Rekonstruktionsverfahren kann deutlich verbessert werden, wenn der angenommene Bilddatensatz zu Beginn der Iteration derart initialisiert wird, dass er bereits eine möglichst große Ähnlichkeit zum Ergebnisbilddatensatz aufweist. Es ist daher bekannt, iterationsbasierte Rekonstruktionsverfahren mit einem Bilddatensatz zu initialisieren, der durch ein weniger aufwändiges Rekonstruktionsverfahren generiert wird, beispielsweise mit einem durch eine gefilterte Rückprojektion generierten Bilddatensatz. Da dieser jedoch bei einer Nutzung eines eingeschränkten Winkelbereichs zur Aufnahme der zweidimensionalen Abbildungen typischerweise stark artefaktbelastet ist, resultieren bei iterativen Rekonstruktionsverfahren typischerweise ähnlich starke Artefakte in dem endgültig rekonstruierten Bilddatensatz.

Es ist daher vorteilhaft, wenn in dem ersten Iterationsschritt der artefaktreduzierte Bilddatensatz als angenommener Bilddatensatz verwendet wird. Bereits durch diese Modifikation der Rekonstruktion der Ergebnisbilddaten gegenüber üblichen iterativen Rekonstruktionsverfahren ist es möglich, Artefakte im Ergebnisbilddatensatz weitgehend zu vermeiden oder zumindest deutlich zu reduzieren.

Ergänzend oder alternativ kann jedoch auch das Iterationsverfahren selbst verbessert werden. Hierbei wird ausgenutzt, dass iterative Rekonstruktionsverfahren umso bessere Rekonstruktionsergebnisse liefern, desto dünner besetzt ein rekonstruierter Datensatz ist. Wie bereits vorangehend diskutiert wurde bzw. wie in der bereits zitierten Veröffentlichung von G.-H. Chen et al. detailliert beschrieben wird, kann eine Rekonstruktion somit dadurch verbessert werden, dass sogenannte "sparsifying transforms", also Ausdünnungsoperatoren verwendet werden, um statt des angenommenen Bilddatensatzes einen demgegenüber ausgedünnten Bilddatensatz zu optimieren. Hierzu ist es typischerweise nicht erforderlich, den ausgedünnten Bilddatensatz explizit zu berechnen, sondern es reicht stattdessen eine im Rahmen der Optimierung genutzten Kostenfunktion entsprechend anzupassen. Da zu erwarten ist, dass der artefaktreduzierte Bilddatensatz zumindest bezüglich großer Teile des Bilddatensatzes große Ähnlichkeit zu dem Ergebnisbilddatensatz aufweisen wird, kann der artefaktreduzierte Bilddatensatz genutzt werden, um effektiv eine Iteration auf einem weiter ausgedünnten Datensatz durchzuführen.

Es kann daher im Rahmen der Iteration eine Kostenfunktion minimiert werden, wobei die Minimierung insbesondere unter wenigstens einer Randbedingung erfolgt, wobei die Kostenfunktion von dem angenommenen Bilddatensatz und von dem artefaktreduzierten Bilddatensatz abhängt. Insbesondere kann die Kostenfunktion von Differenzdaten abhängen, die durch Subtraktion der Daten des angenommenen Bilddatensatzes und des artefaktreduzierten Bilddatensatzes voneinander ermittelt werden. Im Rahmen der Iteration kann somit die folgende Funktion oder eine Kostenfunktion, die die folgende Funktion als Summand umfasst, minimiert werden:

$$(1) \quad \alpha \cdot \left| S_1 \left( X - X_{ar} \right) \right| + (1 - \alpha) \cdot \left| S_2 X \right|$$

Hierbei sind X der angenommene Bilddatensatz und $X_{ar}$ der artefaktreduzierte Bilddatensatz. Die Klammer im ersten Term beschreibt somit die Differenzdaten. $S_1$ und $S_2$ sind jeweils "sparsifying transforms", das heißt also Funktionen bzw. Operationen, die die Daten weiter ausdünnen. Hierbei kann für $S_1$ und $S_2$ auch die gleiche Transformation genutzt werden. Beispielsweise kann eine diskrete Gradiententransformation genutzt werden. $\alpha$ ist ein Gewichtungsfaktor, der angibt, inwieweit im Rahmen der Iteration der artefaktreduzierte Bilddatensatz verwendet werden soll. Wäre $\alpha = 0$, so würde eine übliche iterative Rekonstruktion ohne Berücksichtigung des artefaktreduzierten Bilddatensatzes erfolgen. Um das Verfahren gegenüber möglichen Artefakten im artefaktreduzierten Bilddatensatz zu stabilisieren wird $\alpha$ vorzugsweise < 1 gewählt. Prinzipiell könnte $\alpha$ jedoch = 1 gesetzt werden. Besonders bevorzugt ist $\alpha$ größer als 0,5, größer als 0,7 oder größer als 0,9.

Vorzugsweise wird als Randbedingung im Rahmen der Iteration berücksichtigt, dass bei einer Abbildung des jeweiligen angenommenen Bilddatensatzes die tatsächlich aufgenommenen zweidimensionalen Abbildungen resultieren. Anders ausgedrückt erfolgt die Modifikation des angenommenen Bilddatensatz in den Iterationsschritten jeweils so, dass diese Randbedingung erfüllt ist. Die Randbedingung kann wie folgt ausgedruckt werden:

$$(2) \quad A_i X = Y_i$$

Hierbei ist $Y_i$ die i-te zweidimensionale Abbildung und $A_i$ ist eine Abbildungsvorschrift, beispielsweise eine Abbildungsmatrix, für die jeweilige Abbildung $Y_i$. Da nur Abbildungen aus einem eingeschränkten Winkelbereich vorliegen, resultiert aus der Randbedingung ein unterbestimmtes Gleichungssystem, so dass die Randbedingung als harte Randbedingung verwendet werden kann. Alternativ wäre es jedoch auch möglich, die Randbedingung im Rahmen einer Kostenfunktion zu berücksichtigen, beispielsweise indem die Kostenfunktion die Differenz zwischen den beiden Seiten der Gleichung mit einem Gewichtungsfaktor multipliziert aufnimmt.

Erfindungsgemäß wird zur Rekonstruktion des Ergebnisbilddatensatzes eine gefilterte Rückprojektion verwendet. Dies kann vorteilhaft sein, da eine Rekonstruktion durch eine gefilterte Rückprojektion erheblich weniger rechenaufwändig ist als eine iterative Rekonstruktion. Beispielsweise kann es gewünscht sein, den Ergebnisbilddatensatz bzw. beispielsweise Schnittebenen des Ergebnisbilddatensatzes mit sehr kurzer Verzögerung, also nahezu in Echtzeit, bereitzustellen, beispielsweise wenn das erfindungsgemäße Verfahren genutzt wird, um Ergebnisbilddatensätze im Rahmen einer operationnsbegleitenden Überwachung eines Patienten bereitzustellen. Durch die Nutzung eines Vorwissens in Form des artefaktreduzierten Bilddatensatzes können auch bei einer Rekonstruktion des Ergebnisbilddatensatzes durch eine gefilterte Rückprojektion Artefakte aufgrund eines eingeschränkten Winkelbereichs deutlich reduziert bzw. weitgehend vermieden werden. Insbesondere können fehlende Abbildungen außerhalb des eingeschränkten Winkelbereichs, wie im Folgenden genauer erläutert wird, synthetisch generiert werden.

Für wenigstens einen Abbildungswinkel, der außerhalb des eingeschränkten Winkelbereichs liegt, kann eine zweidimensionale synthetische Abbildung generiert werden, indem eine Abbildung des artefaktreduzierten Bilddatensatzes simuliert wird, wobei die Rekonstruktion des Ergebnisbilddatensatzes in Abhängigkeit der synthetischen Abbildung erfolgt. Die Abbildung kann im einfachsten Fall durch eine Vorwärtsprojektion des artefaktreduzierten Bilddatensatzes erfolgen. Ergänzend können jedoch weitere Eigenschaften der Abbildung, beispielsweise Eigenschaften einer genutzten Erfassungseinrichtung oder Ähnliches, im Rahmen der Simulation berücksichtigt werden. Es sind eine Vielzahl von Verfahren zu Simulation von beispielsweise zweidimensionalen Röntgenbilddaten anhand von dreidimensionalen Bilddatensätzen bekannt, die im erfindungsgemäßen Verfahren genutzt werden können.

Neben dem erfindungsgemäßen Verfahren betrifft die Erfindung eine Verarbeitungseinrichtung zur Verarbeitung von zweidimensionalen Abbildungen, die zur Durchführung des erfindungsgemäßen Verfahrens eingerichtet ist. Die Verarbeitungseinrichtung kann insbesondere eine Speichereinrichtung umfassen, die ein Programm zur Durchführung des Verfahrens und/oder die im Rahmen des Verfahrens genutzten Daten speichern kann. Zudem umfasst sie vorzugsweise einen Prozessor, der die Verfahrensschritte durchführen kann. Die Verarbeitungseinrichtung kann Teil einer insbesondere medizinischen Bildgebungsvorrichtung sein oder dieser zugeordnet sein.

Es ist jedoch auch möglich, dass die Verarbeitungseinrichtung als Server ausgebildet ist, der im gleichen Haus wie eine Bildgebungsvorrichtung oder auch beabstandet hiervon angeordnet sein kann. Die Verarbeitungseinrichtung kann auch als Cloud-Lösung, das heißt durch eine Vielzahl von über ein Netz erreichbaren Computersystemen, implementiert sein.

Daneben betrifft die Erfindung ein Computerprogramm, welches direkt in einen Speicher einer Verarbeitungseinrichtung ladbar ist, mit Programm-Mitteln, um die Schritte des erfindungsgemäßen Verfahrens durchzuführen, wenn das Programm in der Verarbeitungseinrichtung ausgeführt wird.

Zudem betrifft die Erfindung einen elektronisch lesbaren Datenträger mit darauf gespeicherten elektronisch lesbaren Steuerinformationen, welche zumindest ein erfindungsgemäßes Computerprogramm umfassen und derart ausgestaltet sind, dass sie bei Verwendung des Datenträgers in einer Verarbeitungseinrichtung das erfindungsgemäße Verfahren durchführen.

Die Erfindung betrifft zudem eine Röntgeneinrichtung, umfassend eine Bilderfassungseinrichtung zur Erfassung von zweidimensionalen Abbildungen eines Untersuchungsobjekts, nämlich von Röntgenaufnahmen, aus mehreren Abbildungswinkeln, wobei die Röntgeneinrichtung eine erfindungsgemäße Verarbeitungseinrichtung umfasst. Die Röntgeneinrichtung kann eine Computertomographieeinrichtung oder eine C-Bogen-Einrichtung sein. Die Röntgeneinrichtung kann insbesondere eine Ausgabeeinrichtung umfassen bzw. Daten an eine Ausgabeeinrichtung bereitstellen, um Schnittbilder oder andere aus dem Ergebnisbilddatensatz ermittelte Darstellungen anzuzeigen. Die Röntgeneinrichtung umfasst vorzugsweise eine Röntgenquelle und einen Röntgendetektor, die um das Untersuchungsobjekt, beispielsweise einen auf einer Patientenliege gelagerten Patienten, rotierbar sind. Hierbei kann ein Rotationswinkel aufgrund des Aufbaus der Röntgeneinrichtung oder aufgrund einer Benutzungssituation eingeschränkt sein, so dass Abbildungen bzw. Röntgenaufnahmen nur in einem eingeschränkten Winkelbereich erfassbar sind.

Weitere Vorteile und Einzelheiten der vorliegenden Erfindung ergeben sich aus den folgenden Ausführungsbeispielen sowie den zugehörigen Zeichnungen. Hierbei zeigen schematisch:

Fig. 1 ein Ausführungsbeispiel einer erfindungsgemäßen Röntgeneinrichtung, die eine erfindungsgemäße Verarbeitungseinrichtung umfasst sowie ein Ausführungsbeispiel einer weiteren erfindungsgemäßen Verarbeitungseinrichtung,

Fig. 2 die Verarbeitung von zweidimensionalen Abbildungen zu einem Ergebnisbilddatensatz in einem Ausführungsbeispiel des erfindungsgemäßen Verfahrens,

Fig. 3 ein Ablaufdiagramm eines Ausführungsbeispiels des erfindungsgemäßen Verfahrens,

Fig. 4 ein Ablaufdiagramm eines Verfahrens zum Training eines im Rahmen eines Ausführungsbeispiels des erfindungsgemäßen Verfahrens nutzbaren Algorithmus zur Reduktion von Artefakten, und

Fig. 5 ein Ausführungsbeispiel für eine iterative Rekonstruktion eines Ergebnisbilddatensatzes im Rahmen eines Ausführungsbeispiels des erfindungsgemäßen Verfahrens.

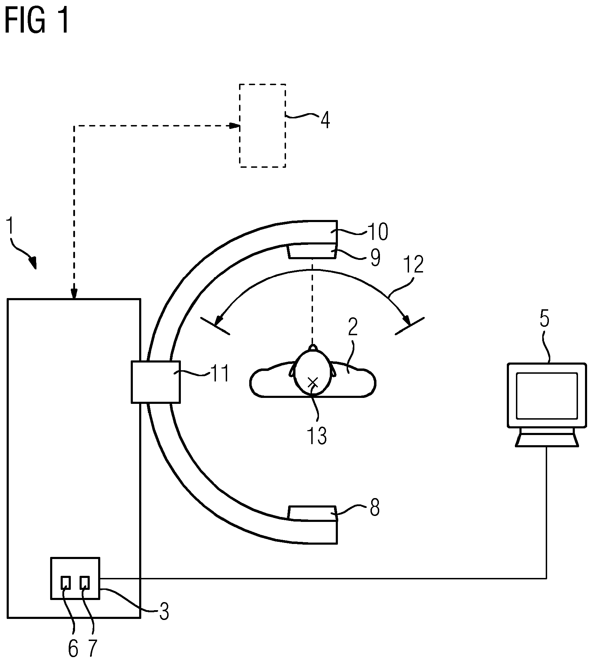

Fig. 1 zeigt eine Röntgeneinrichtung 1, die im gezeigten Beispiel eine C-Bogen-Röntgeneinrichtung ist. Die Röntgeneinrichtung 1 dient dazu, mehrere zweidimensionale Abbildungen eines Untersuchungsobjekts 2, im Beispiel eines Patienten, zu erfassen. Durch eine interne oder externe Verarbeitungseinrichtung 3,4 kann aus den zweidimensionalen Abbildungen ein dreidimensionaler Ergebnisbilddatensatz rekonstruiert werden, beispielsweise um Schnittbilder des Untersuchungsobjekts auf einer Anzeigeeinrichtung 5 zu visualisieren, oder um diese Daten anderweitig zu verwerten. Die Verarbeitungseinrichtungen 3, 4 umfassen jeweils eine Speichereinrichtung 6, die zur Speicherung der zweidimensionalen Abbildungen und des dreidimensionalen Ergebnisbilddatensatzes sowie weiteren im Rahmen der Rekonstruktion anfallenden Daten dient. Zudem kann die Speichereinrichtung ein Computerprogramm speichern, das bei einer Ausführung durch den Prozessor 7 der Verarbeitungseinrichtung 3 das Verfahren zur Rekonstruktion des dreidimensionalen Ergebnisbilddatensatzes aus den zweidimensionalen Abbildungen durchführt.

Die Röntgeneinrichtung umfasst eine Bilderfassungseinrichtung 8, nämlich einen Röntgendetektor, und eine Röntgenquelle 9. Die Bilderfassungseinrichtung 8 und die Röntgenquelle 9 sind an einen C-Bogen 10 gehaltert, wodurch sie durch eine Aktor 11, in einem eingeschränkten Winkelbereich 12 um die Achse 13 verschwenkbar sind. Würden durch die Verarbeitungseinrichtungen 3, 4 die zweidimensionalen Abbildungen unmittelbar durch übliche Rekonstruktionsverfahren, wie beispielsweise eine gefilterte Rückprojektion oder iterative Verfahren, zu dreidimensionalen Ergebnisbilddatensätzen rekonstruiert, so würden aufgrund des eingeschränkten Winkelbereichs 12 deutlich Artefakte im Ergebnisbilddatensatz resultieren, die die Interpretation des Ergebnisbilddatensatzes bzw. von aus diesen generierten Schnittbildern deutlich erschweren können.

Daher wird durch die Verarbeitungseinrichtungen 3, 4 ein Rekonstruktionsverfahren durchgeführt, bei dem zunächst ein dreidimensionaler artefaktreduzierter Bilddatensatz in Abhängigkeit der zweidimensionalen Abbildungen bereitgestellt wird. Im Rahmen der Bereitstellung des artefaktreduzierten Bilddatensatzes werden die zweidimensionalen Abbildungen oder ein von den zweidimensionalen Abbildungen abhängiges Verarbeitungsergebnis durch einen Algorithmus zur Reduktion von Artefakten, die aus der Einschränkung des Winkelbereichs 12 resultieren, verarbeitet. Der Algorithmus zur Reduktion von Artefakten kann insbesondere durch ein Verfahren des Maschinenlernens trainiert sein.

Der Ergebnisbilddatensatz wird anschließend durch einen Rekonstruktionsalgorithmus rekonstruiert, der sowohl den artefaktreduzierten Bilddatensatz oder aus diesem generierte Verarbeitungsdaten als auch die zweidimensionalen Abbildungen als Eingangsdaten verarbeitet. Verschiedene Varianten eines solchen Verfahrens werden später noch im Detail diskutiert werden. Die Berücksichtigung sowohl eines artefaktreduzierten Bilddatensatzes als auch der zweidimensionalen Abbildungen selbst im Rahmen der Rekonstruktion ermöglicht es, Artefakte aufgrund des eingeschränkten Winkelbereichs 12 deutlich zu reduzieren bzw. nahezu vollständig zu vermeiden, wobei gleichzeitig erreicht werden kann, dass ein Informationsverlust aufgrund der Reduktion von Artefakten, beispielsweise ein versehentliches Entfernen anatomischer Strukturen, wie beispielsweise einer Läsion, aus dem Ergebnisdatensatz vermieden wird.

Wie in Fig. 1 dargestellt ist, kann je nach konkretem Anwendungsfall vorteilhaft eine interne Verarbeitungseinrichtung 3 oder eine externe Verarbeitungseinrichtung 4 genutzt werden. Die Nutzung einer internen Verarbeitungseinrichtung 3 ist insbesondere vorteilhaft, wenn unmittelbar durch die Röntgeneinrichtung aus dem dreidimensionalen Ergebnisdatensatz ermittelte Informationen ausgegeben werden sollen. Dies kann beispielsweise zweckmäßig sein, wenn eine Informationsausgabe nahezu in Echtzeit erfolgen soll, beispielsweise wenn die Bildgebung operationsbegleitend eingesetzt werden soll. Andererseits kann eine externe Verarbeitungseinrichtung dann vorteilhaft sein, wenn die Rekonstruktion weniger zeitkritisch ist, also beispielsweise der dreidimensionale Ergebnisdatensatz erst zu einem späteren Zeitpunkt ausgewertet werden soll. In diesem Fall kann eine Verarbeitung beispielsweise durch einen Cloud-basierten Dienst bzw. einen externen Server durchgeführt werden. Es ist jedoch auch möglich, eine externe Verarbeitungsvorrichtung 4 im gleichen Raum oder zumindest im gleichen Gebäude anzuordnen, wie die Röntgeneinrichtung 1. Beispielsweise kann als Verarbeitungseinrichtung 4 ein Arbeitsplatzrechner eines Arztes oder eines anderen medizinischen Fachpersonals genutzt werden.

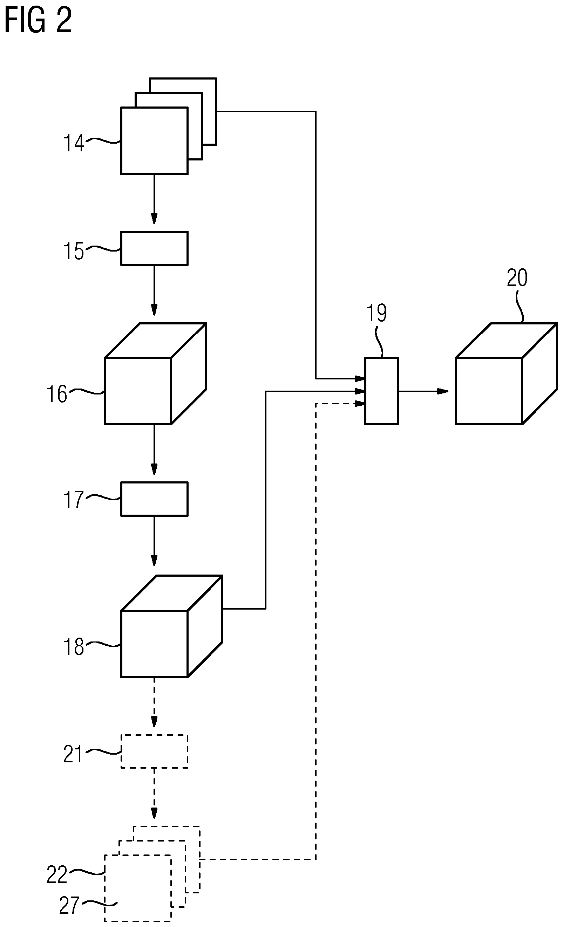

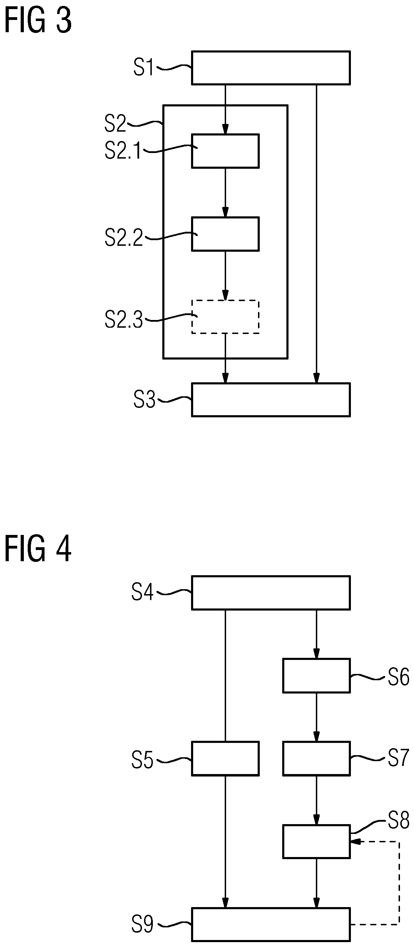

Fig. 2 zeigt schematisch die Rekonstruktion eines dreidimensionalen Ergebnisbilddatensatzes 20 aus den in dem eingeschränkten Winkelbereich 12 erfassten zweidimensionalen Abbildungen 14. Diese Rekonstruktion wird im Folgenden mit Bezug auf Fig. 3 erläutert, die ein zugehöriges Ablaufdiagramm des Rekonstruktionsverfahrens zeigt.

In Schritt S1 werden zunächst zweidimensionale Abbildungen 14 aus verschiedenen Abbildungswinkeln innerhalb des eingeschränkten Winkelbereichs 12 erfasst. Hierzu kann beispielsweise die interne Verarbeitungseinrichtung 3 oder eine andere Steuereinrichtung der Röntgeneinrichtung 1 den Aktor 11 ansteuern, um den C-Bogen 10 entsprechend zu verschwenken und anschließend durch Ansteuerung der Röntgenröhre 9 und Erfassen von Bilddaten über die Bilderfassungseinrichtung 8 die einzelnen Abbildungen 14 erfassen. In einem alternativen Ausführungsbeispiel könnten die Abbildungen 14 durch eine andere Bilderfassungseinrichtung erfasst oder anderweitig bereitgestellt werden.

In Schritt S2 wird zunächst ein dreidimensionaler artefaktreduzierter Bilddatensatz 18 in Abhängigkeit der zweidimensionalen Abbildungen 14 bereitgestellt. In den diskutierten Beispielen kann dieser Schritt zwei bzw. drei Unterschritte umfassen.

In Schritt S2.1 wird zunächst durch ein Rekonstruktionsmodul 15 ein vorläufiger Bilddatensatz als Verarbeitungsergebnis 10 rekonstruiert. Dies kann durch im Stand der Technik bekannte Rekonstruktionsverfahren erfolgen. Beispielsweise kann eine gefilterte Rückprojektion oder auch ein iteratives Rekonstruktionsverfahren genutzt werden, um den vorläufigen Bilddatensatz aus den zweidimensionalen Abbildungen 14 zu rekonstruieren. Da im Rahmen der Rekonstruktion nur zweidimensionale Abbildungen 14 aus einem eingeschränkten Winkelbereich 12, beispielsweise einem Winkelbereich von 120° oder 150° genutzt werden, ist der vorläufige Bilddatensatz 16 üblicherweise durch starke Artefakte gestört.

In Schritt S2.2 wird der vorläufige Bilddatensatz 16 daher durch einen Algorithmus 17 zur Reduktion von Artefakten weiterverarbeitet, um den artefaktreduzierten Bilddatensatz 18 bereitzustellen. Als Algorithmus 17 wird vorzugsweise ein Algorithmus verwendet, der durch ein Verfahren des Maschinenlernens trainiert wurde, beispielsweise ein neuronales Netz oder Ähnliches. Eine Möglichkeit zum Training eines entsprechenden Algorithmus 17 wird später noch mit Bezug auf Fig. 4 erläutert werden. Beispielsweise könnte als Algorithmus 17 auch ein Algorithmus verwendet werden, wie er in der bereits zitierten Veröffentlichung von G.-H. Chen et al. diskutiert wird.

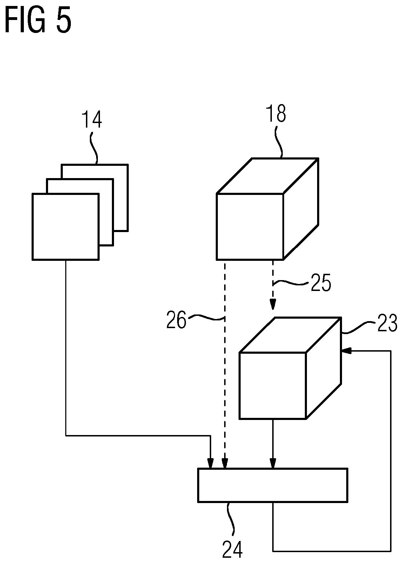

Der artefaktreduzierte Bilddatensatz 18 und die zweidimensionalen Abbildungen 14 können im Schritt S3 unmittelbar als Eingangsdaten eines Rekonstruktionsalgorithmus 19 genutzt werden, um den dreidimensionalen Ergebnisbilddatensatz 20 zu rekonstruieren. Der zusätzliche Schritt 2.3 ist in diesem Fall nicht erforderlich. Dies ist insbesondere dann zweckmäßig, wenn ein iteratives Rekonstruktionsverfahren als Rekonstruktionsalgorithmus 19 genutzt wird. Hierbei kann im einfachsten Fall ein übliches iteratives Rekonstruktionsverfahren verwendet werden, wobei jedoch eine Initialisierung durch den artefaktreduzierten Bilddatensatz 18 erfolgt. Gegenüber einer im Stand der Technik üblichen Initialisierung eines iterativen Verfahrens mit einer gefilterten Rückprojektion der zweidimensionalen Abbildungen 14 kann hierdurch bereits eine deutliche Reduktion der im Ergebnisbilddatensatz 20 verbleibenden Artefakte aufgrund des eingeschränkten Winkelbereichs 12 erreicht werden. Eine weitere Reduktion der Artefakte im Ergebnisbilddatensatz kann potentiell dadurch erreicht werden, dass der artefaktreduzierte Bilddatensatz in den einzelnen Iterationsschritten einer iterativen Rekonstruktion berücksichtigt wird. Dies wird später noch mit Bezug auf Fig. 5 erläutert werden.

Eine Nutzung eines iterativen Rekonstruktionsalgorithmus als Rekonstruktionsalgorithmus 19 führt zwar zu einer qualitativ hochwertigen Rekonstruktion des dreidimensionalen Ergebnisbilddatensatzes, ein solcher Rekonstruktionsalgorithmus ist jedoch relativ rechenaufwändig. Steht nur eine eingeschränkte Rechenleistung zur Verfügung, kann ein derart rekonstruierter dreidimensionaler Ergebnisbilddatensatz typischerweise erst mit deutlicher Zeitverzögerung bereitgestellt werden. Soll nur eine relativ geringe Rechenleistung bereitgestellt werden bzw. ist eine sehr schnelle Bereitstellung des dreidimensionalen Ergebnisbilddatensatzes gewünscht, kann als Rekonstruktionsalgorithmus 19 beispielsweise auch eine gefilterte Rückprojektion verwendet werden. In diesem Fall ist es zweckmäßig vor der Durchführung des Schritts S3 zunächst in Schritt S2.3 eine Vorverarbeitung des artefaktreduzierten Bilddatensatzes 18 durchzuführen, um aus diesem generierte Verarbeitungsdaten 22 bereitzustellen. Hierzu können durch ein Abbildungssimulationsmodul 21 für Abbildungswinkel, die außerhalb des eingeschränkten Winkelbereichs 12 liegen, zweidimensionale synthetische Abbildungen 27 generiert werden. Dies kann im einfachsten Fall durch eine unmittelbare Vorwärtsprojektion des artefaktreduzierten Bilddatensatzes 18 erfolgen. Es können jedoch aufwändigere Simulationen genutzt werden, die beispielsweise Eigenschaften der Röntgeneinrichtung 1 mitberücksichtigen. Verschiedene Ansätze zur Simulation einer Röntgenbildgebung auf Basis eines dreidimensionalen Bilddatensatzes sind im Stand der Technik bekannt und sollen daher nicht detailliert diskutiert werden.

Im Rahmen des Rekonstruktionsalgorithmus 19 können in Schritt S3 in diesem Fall dann die zweidimensionalen Abbildungen 14 für den eingeschränkten Winkelbereich und die synthetischen Abbildungen 27 für den Bereich außerhalb des eingeschränkten Winkelbereichs genutzt werden, so dass auch bei Nutzung einer gefilterten Rückprojektion als Rekonstruktionsalgorithmus ein weitgehend artefaktfreier Ergebnisbilddatensatz resultiert.

Fig. 4 zeigt ein Ablaufdiagramm für ein mögliches Verfahren zum Training des Algorithmus 17 zur Reduktion von Artefakten. Hierzu werden in Schritt S4 zunächst zweidimensionale Abbildungen von Referenzobjekten erfasst. Beispielsweise kann ein Computertomograph genutzt werden, um zweidimensionale Abbildungen über einen großen Winkelbereich, insbesondere über einen Winkelbereich von 360°, zu erfassen, so dass aus den erfassten zweidimensionalen Abbildungen eine im Wesentlichen artefaktfreie Rekonstruktion eines Ergebnisbilddatensatzes möglich ist. In den Schritten S5 bis S7 wird aus einer jeweiligen Gruppe von zweidimensionalen Abbildungen jeweils ein Trainingsdatensatz für diesen Abbildungsvorgang generiert. Hierzu wird in Schritt S5 eine Rekonstruktion auf Basis aller in Schritt S4 erfasster zweidimensionaler Abbildungen durchgeführt, um einen Referenzbilddatensatz, der im Wesentlichen artefaktfrei ist, zu generieren. In Schritt S6 werden parallel hierzu zunächst alle zweidimensionalen Abbildungen verworfen, die außerhalb eines eingeschränkten Winkelbereichs liegen, für den der Algorithmus 17 trainiert werden soll. Anschließend erfolgt in Schritt S7 eine Rekonstruktion eines Eingangsbilddatensatzes aus den verbleibenden zweidimensionalen Abbildungen innerhalb des eingeschränkten Winkelbereichs.

Anhand der in den Schritten S4 bis S7 generierten Trainingsdatensätze erfolgt in den Schritten S8 und S9 ein Training des Algorithmus 17. Hierbei wird in Schritt S8 der Algorithmus 17 auf einen jeweiligen in Schritt S7 ermittelten Eingangsbilddatensatz angewandt und das Ergebnis des Algorithmus 17 wird in Schritt S9 mit dem im Schritt S5 generierten Referenzbilddatensatz verglichen. In Abhängigkeit dieses Vergleichs wird, beispielsweise durch Minimieren einer Kostenfunktion, was beispielsweise durch ein Gradientenabstiegsverfahren bzw. eine Fehlerrückführung erreicht werden kann, die Parametrisierung des Algorithmus 17 angepasst. Dieses Vorgehen wird iterativ für verschiedene Trainingsdatensätze wiederholt, bis ein ausreichendes Training des Algorithmus 17 erreicht ist.

Fig. 5 zeigt schematisch die Durchführung eines iterativen Rekonstruktionsverfahrens, das als Rekonstruktionsverfahren 19 in Fig. 2 genutzt werden kann. In iterativen Rekonstruktionsverfahren wird ein angenommener Bilddatensatz 23 in jedem Iterationsschritt durch ein Veränderungsmodul 24 verändert. Die Veränderung erfolgt in Abhängigkeit des angenommenen Bilddatensatzes 23 und der Abbildungen 14 des Untersuchungsobjekts 2. Bei üblichen Iterationsverfahren wird hierbei eine Transformation, beispielsweise eine diskrete Gradiententransformation, auf den angenommenen Bilddatensatz 23 angewandt und der angenommene Bilddatensatz 23 derart variiert, dass ein möglichst dünn besetzter transformierter Datensatz resultiert. Dies entspricht der Nutzung der bereits diskutierten Funktion

$$(1)\quad \alpha\cdot\left|S_1\big(X-X_{ar}\big)\right|+(1-\alpha)\cdot\left|S_2 X\right|$$

als Kostenfunktion, wenn der Parameter $\alpha$ auf null gesetzt wird.

Wie bereits vorangehend zur oben genannten Gleichung diskutiert kann die Variation hierbei unter der Randbedingung erfolgen, dass entsprechende Abbildungen des angenommenen Bilddatensatzes 23 den tatsächlichen Abbildungen 14 des Untersuchungsobjekts entsprechen. Dies kann als harte Randbedingung verwendet werden, jedoch auch als weiche Randbedingung, beispielsweise indem ein Maß für die Abweichung der Abbildungen des angenommenen Datensatzes 23 von den jeweiligen Abbildungen 14 in einer Kostenfunktion, die minimiert wird, berücksichtigt wird.

Um den artefaktreduzierten Bilddatensatz 18 im Rahmen der Rekonstruktion zu berücksichtigen, sind in Fig. 5 schematisch zwei Ansätze dargestellt. Die einfachste Modifikation des beschriebenen Iterationsverfahren ist es, wie durch den Pfeil 25 dargestellt, im ersten Iterationsschritt den artefaktreduzierten Bilddatensatz 18 als angenommenen Bilddatensatz 23 zu nutzen. Aufgrund der Artefaktreduktion ist hierbei zu erwarten, dass Abbildungen des artefaktreduzierten Bilddatensatzes 18 von den entsprechenden Abbildungen 14 des Untersuchungsobjekts zumindest geringfügig abweichen. Durch die obig erläuterte Randbedingung der Variation des angenommenen Bilddatensatzes 23 wird diese Abweichung im Rahmen der Iteration reduziert bzw. behoben. Zugleich bleibt die Artefaktreduzierung zumindest weitgehend erhalten.

Ergänzend oder alternativ kann der artefaktreduzierte Bilddatensatz, wie durch den Pfeil 26 dargestellt ist, jedoch auch im Rahmen der Variation im Variationsmodul 24 berücksichtigt werden. Dies erfolgt, wenn in der oben angegebenen Gleichung der Parameter $\alpha$ auf einen Wert ungleich null gesetzt wird. Hierbei wird ausgenutzt, dass der tatsächlich zu generierende dreidimensionale Ergebnisbilddatensatz 20 voraussichtlich große Ähnlichkeit zum artefaktreduzierten Bilddatensatz 18 aufweisen wird, so dass die Dünnbesetzung des transformierten Datensatzes und somit auch die Qualität der iterativen Rekonstruktion dadurch verbessert werden kann, dass Differenzdaten betrachtet werden, die durch Subtraktion der Daten des angenommenen Bilddatensatzes 23 und des artefaktreduzierten Bilddatensatzes 18 voneinander ermittelt werden. Dies wurde bereits vorangehend detailliert diskutiert, weshalb die Ausführungen hier nicht wiederholt werden sollen.

Wie bereits erläutert, können die beschriebenen Verfahren zur Rekonstruktion des Ergebnisbilddatensatzes 20 durch ein Computerprogramm implementiert sein. Dieses kann beispielsweise durch einen nicht dargestellten elektronisch lesbaren Datenträger gespeichert sein, der es insbesondere dauerhaft speichert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Rekonstruktion eines dreidimensionalen Ergebnisbilddatensatzes (20), insbesondere einer Computertomographie, aus mehreren zweidimensionalen Abbildungen (14), insbesondere aus Röntgenaufnahmen, die ein Untersuchungsobjekt (2) aus einem jeweiligen Abbildungswinkel abbilden, umfassend die Schritte:

   - Bereitstellen eines dreidimensionalen artefaktreduzierten Bilddatensatzes (18) in Abhängigkeit der zweidimensionalen Abbildungen (14), wobei im Rahmen der Bereitstellung die zweidimensionalen Abbildungen (14) oder ein von den zweidimensionalen Abbildungen (14) abhängiges Verarbeitungsergebnis (16) durch einen Algorithmus (17) zur Reduktion von Artefakten verarbeitet werden,
   - Rekonstruktion des Ergebnisbilddatensatzes (20) durch einen Rekonstruktionsalgorithmus (19), der sowohl den artefaktreduzierten Bilddatensatz (18) oder aus dem artefaktreduzierten Bilddatensatz generierte Verarbeitungsdaten (22) als auch die zweidimensionalen Abbildungen (14) als Eingangsdaten verarbeitet,

   wobei die Abbildungswinkel aller zweidimensionalen Abbildungen (14) in einem eingeschränkten Winkelbereich (12) liegen, und die zweidimensionalen Abbildungen (14) oder das von den zweidimensionalen Abbildungen (14) abhängige Verarbeitungsergebnis (16) durch den Algorithmus (17) zur Reduktion von Artefakten, die aus der Einschränkung des Winkelbereichs (12) resultieren, verarbeitet werden, **dadurch gekennzeichnet, dass** zur Rekonstruktion des Ergebnisbilddatensatzes (20) eine gefilterte Rückprojektion verwendet wird, wobei die gefilterte Rückprojektion aus dem artefaktreduzierten Bilddatensatz generierte Verarbeitungsdaten (22), die für die gefilterte Rückprojektion geeignet sind, als auch die zweidimensionalen Abbildungen (14) als Eingangsdaten verarbeitet,

wobei als aus dem artefaktreduzierten Bilddatensatz generierte Verarbeitungsdaten (22) eine zweidimensionale synthetische Abbildung (27) generiert wird, indem eine Abbildung des artefaktreduzierten Bilddatensatzes (18) simuliert wird,

wobei die Rekonstruktion des Ergebnisbilddatensatzes (20) in Abhängigkeit der synthetischen Abbildung (27) erfolgt.

2. Verfahren nach Anspruch 1, **dadurch gekennzeichnet, dass** als Algorithmus (17) zur Reduktion von Artefakten, ein Algorithmus (17) verwendet wird, der durch ein Verfahren des Maschinenlernens trainiert ist oder wird.

3. Verfahren nach einem der vorhergehenden Ansprüche, **dadurch gekennzeichnet, dass** als Verarbeitungsergebnis (16) der Verarbeitung der zweidimensionalen Abbildungen (14) ein dreidimensionaler vorläufiger Bilddatensatzes rekonstruiert wird, der durch den Algorithmus (17) zur Reduktion von Artefakten weiterverarbeitet wird, um den artefaktreduzierten Bilddatensatz (18) bereitzustellen.

4. Verfahren nach einem der vorangehenden Ansprüche, **dadurch gekennzeichnet, dass** zur Rekonstruktion des Ergebnisbilddatensatzes (20) ein iteratives Rekonstruktionsverfahren verwendet wird, wobei in jedem Iterationsschritt ein angenommener Bilddatensatz (23) in Abhängigkeit der Abbildungen (14) des Untersuchungsobjekts (2) verändert wird.

5. Verfahren nach Anspruch 4, **dadurch gekennzeichnet, dass** in dem ersten Iterationsschritt der artefaktreduzierte Bilddatensatz (18) als angenommener Bilddatensatz (23) verwendet wird.

6. Verfahren nach einem der Ansprüche 4 oder 5, **dadurch gekennzeichnet, dass** im Rahmen der Iteration eine Kostenfunktion minimiert wird, wobei die Minimierung insbesondere unter wenigstens einer Randbedingung erfolgt, wobei die Kostenfunktion von dem angenommenen Bilddatensatz (23) und von dem artefaktreduzierten Bilddatensatz (18) abhängt.

7. Verfahren nach Anspruch 6, **dadurch gekenn-**

**zeichnet, dass** die Kostenfunktion von Differenzdaten abhängt, die durch Subtraktion der Daten des angenommenen Bilddatensatzes (23) und des artefaktreduzierten Bilddatensatzes (18) voneinander ermittelt werden.

8. Verarbeitungseinrichtung zur Verarbeitung von zweidimensionalen Abbildungen, **dadurch gekennzeichnet, dass** sie zur Durchführung des Verfahrens nach einem der vorangehenden Ansprüche eingerichtet ist.

9. Röntgeneinrichtung, umfassend eine Bilderfassungseinrichtung (8) zur Erfassung von zweidimensionalen Abbildungen (14) eines Untersuchungsobjekt (2), nämlich von Röntgenaufnahmen, aus mehreren Abbildungswinkeln, **dadurch gekennzeichnet, dass** sie eine Verarbeitungseinrichtung (3) nach Anspruch 8 umfasst.

10. Computerprogramm, welches direkt in einen Speicher (6) einer Verarbeitungseinrichtung (3, 4) ladbar ist, mit Programm-Mitteln, um die Schritte des Verfahrens nach einem der Ansprüche 1 bis 7 durchzuführen, wenn das Programm in der Verarbeitungseinrichtung (3, 4) ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einer Verarbeitungseinrichtung das Verfahren nach einem der Ansprüche 1 bis 7 durchführen.

**Claims**

1. Method for reconstructing a three-dimensional result image data set (20), in particular from computed tomography, from a plurality of two-dimensional images (14), in particular X-ray images, that create an image of an object undergoing examination (2) from a respective imaging angle, comprising the steps of:

 - providing a three-dimensional artifact-reduced image data set (18) in dependence on the two-dimensional images (14), wherein in the context of this provision, the two-dimensional images (14) or a processing result (16) that is dependent on the two-dimensional images (14) are processed by an algorithm (17) for reducing artifacts,
 - reconstructing the result image data set (20) using a reconstruction algorithm (19) that processes both the artifact-reduced image data set (18) or processing data (22) that is generated from the artifact-reduced image data set, and also the two-dimensional images (14) as input data,

wherein the imaging angles of all the two-dimensional images (14) lie within a restricted angular range (12), and the two-dimensional images (14) or the processing result (16) dependent on the two-dimensional images (14) are processed by the algorithm (17) for reducing artifacts resulting from the restriction on the angular range (12), **characterised in that**,

for the purpose of reconstructing the result image data set (20), filtered back projection is used, wherein the filtered back projection processes processing data (22) generated from the artifact-reduced image data set, which is suitable for the filtered back projection, as well as the two-dimensional images (14), as input data,

wherein a synthetic two-dimensional image (27) is generated as processing data (22) generated from the artifact-reduced image data set, by simulating an image of the artifact-reduced image data set (18), wherein the result image data set (20) is reconstructed in dependence on the synthetic image (27).

2. Method according to claim 1, **characterised in that** as the algorithm (17) for reducing artifacts there is used an algorithm (17) that has been or is trained by a machine learning method.

3. Method according to one of the preceding claims, **characterised in that**, as the processing result (16) of processing the two-dimensional images (14), there is reconstructed a provisional three-dimensional image data set that is further processed by the algorithm (17) for reducing artifacts in order to provide the artifact-reduced image data set (18).

4. Method according to one of the preceding claims, **characterised in that**, for the purpose of reconstructing the result image data set (20), an iterative reconstruction method is used, wherein an assumed image data set (23) is varied at each iteration step in dependence on the images (14) of the object undergoing examination (2).

5. Method according to claim 4, **characterised in that**, in the first iteration step, the artifact-reduced image data set (18) is used as the assumed image data set (23).

6. Method according to claim 4 or 5, **characterised in that** in the course of iteration a cost function is minimised, wherein the minimisation takes place in particular with at least one boundary condition, the cost function depending on the assumed image data set (23) and the artifact-reduced image data set (18).

7. Method according to claim 6, **characterised in that** the cost function depends on difference data determined by subtracting the data of the assumed image data set (23) and the artifact-reduced image data set (18) from one another.

8. Processing device for processing two-dimensional images, **characterised in that** it is intended for performing the method according to one of the preceding claims.

9. X-ray device comprising an image capturing device (8) for capturing two-dimensional images (14) of an object undergoing examination (2), namely X-ray images, from a plurality of imaging angles, **characterised in that** it comprises a processing device (3) according to claim 8.

10. Computer program that may be loaded directly into a memory (6) of a processing device (3, 4), having program means in order to perform the steps of the method according to one of claims 1 to 7 when the program is executed in the processing device (3, 4).

11. Electronically readable data medium with, stored thereon, electronically readable control information that comprises at least one computer program according to claim 10 and takes a form such that it performs the method according to one of claims 1 to 7 when the data medium is used in a processing device.

**Revendications**

1. Procédé de reconstruction d'un ensemble (20) de données d'image résultante en trois dimensions, notamment d'une tomodensitographie assistée par ordinateur, à partir de plusieurs reproductions (14) en deux dimensions, notamment d'enregistrement aux rayons X, qui reproduisent un objet (2) à examiner à partir d'un angle de reproduction respectif, comprenant les stades :

   - mise à disposition d'un ensemble (18) de données d'image en trois dimensions réduit en artéfact en fonction des reproductions (14) en deux dimensions, dans lequel dans le cadre de la mise à disposition, on traite les reproductions (14) en deux dimensions ou un résultat (16) de traitement dépendant des reproductions (14) en deux dimensions par un algorithme (17) pour la réduction d'artéfacts,
   - reconstruction de l'ensemble (20) de données d'image résultante par un algorithme (19) de reconstruction, qui traite, comme données d'entrée, tant l'ensemble (18) de données d'image réduit en artéfact ou des données (22) de traitement produites à partir de l'ensemble de données d'image réduit en artéfact qu'également les reproductions (14) en deux dimensions,

dans lequel l'angle de reproduction de toutes les reproductions (14) en deux dimensions est dans une plage (12) angulaire réduite et on traite les reproductions (14) en deux dimensions ou le résultat (16) de traitement qui dépend des reproductions (14) en deux dimensions par l'algorithme (17) pour la réduction d'artéfacts, qui proviennent de la limitation de la plage (12) angulaire,

**caractérisé en ce que**, pour la reproduction de l'ensemble (20) de données d'image résultante, on utile une rétroprojection filtrée, dans lequel la rétroprojection filtrée traite, comme données d'entrée, des données (22) de traitement, qui sont produites à partir de l'ensemble de données d'image réduit en artéfact et qui conviennent pour la rétroprojection filtrée ainsi qu'également les reproductions (14) en deux dimensions,

dans lequel on produit une reproduction (27) synthétique en deux dimensions comme données (22) de traitement produite à partir de l'ensemble de données d'image réduit en artéfact en simulant une reproduction de l'ensemble (18) de donnée d'image réduit en artéfact, dans lequel la reconstruction de l'ensemble (20) de données d'image résultante s'effectue en fonction de la reproduction (27) synthétique.

2. Procédé suivant la revendication 1, **caractérisé en ce que** l'on utilise comme algorithme (17) pour la réduction d'artéfact un algorithme (17), qui a subi un apprentissage ou auquel on fait subir un apprentissage par un procédé d'apprentissage automatique.

3. Procédé suivant l'une des revendications précédentes, **caractérisé en ce que** l'on reconstruit comme résultat (16) du traitement des reproductions (14) en deux dimensions un ensemble de données d'image provisoire en trois dimensions, que l'on retraite par l'algorithme (17) pour la réduction d'artéfact, afin de mettre à disposition l'ensemble (18) de données d'image, afin de disposer de l'ensemble (18) de données d'image réduit en artéfact.

4. Procédé suivant l'une des revendications précédentes, **caractérisé en ce que** l'on utilise pour la reconstruction de l'ensemble (20) de données d'image résultante un procédé de reconstruction par itération, dans lequel dans chaque pas d'itération, on modifie un ensemble (28) de données d'image pris en fonction des reproductions (14) de l'objet (2) à examiner.

5. Procédé suivant la revendication 4, **caractérisé en ce que** dans le premier pas d'itération, on utilise l'ensemble (18) de données d'image réduit en artéfact comme ensemble (23) de données d'image pris.

6. Procédé suivant l'une des revendications 4 ou 5, **caractérisé en ce que**, dans le cadre de l'itération, on minimise une fonction de coût, la minimisation s'effectuant notamment dans au moins une condition aux limites, dans lequel la fonction de coût dépend de l'ensemble (23) de données d'image pris et de l'ensemble (18) de données d'image réduit en artéfact.

7. Procédé suivant la revendication 6, **caractérisé en ce que** la fonction de coût dépend de données de différence, que l'on détermine par soustraction des données de l'ensemble (23) de données d'image pris et de l'ensemble (18) de données d'image réduit en artéfact.

8. Dispositif de traitement pour traiter des reproductions en deux dimensions, **caractérisé en ce qu'**il est conçu pour effectuer le procédé suivant l'une des revendications précédentes.

9. Dispositif à rayons X, comprenant un dispositif (8) de prise d'images pour prendre des reproductions (14) en deux dimensions d'un objet (2) à examiner, à savoir des enregistrements de rayons X, à partir de plusieurs angles de reproduction, **caractérisé en ce qu'**il comprend un dispositif (3) de traitement suivant la revendication 8.

10. Programme d'ordinateur, qui peut être chargé directement dans une mémoire (6) d'un dispositif (3, 4) de traitement, comprenant des moyens de programme, pour effectuer les stades du procédé suivant l'une des revendications 1 à 7, lorsque le programme est exécuté dans le dispositif (3, 4) de traitement.

11. Support de données déchiffrable électroniquement, sur lequel sont mises en mémoire des informations de commande déchiffrables électroniquement, qui comprennent au moins un programme d'ordinateur suivant la revendication 10 et qui sont conformées de manière à ce qu'elles effectuent, lors de l'utilisation du support de données dans un dispositif de traitement, le procédé suivant l'une des revendications 1 à 7.

# FIG 1

## FIG 2

FIG 3

FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012177267 A1

**In der Beschreibung aufgeführte Nicht-Patentliteratur**

- **VERÖFFENTLICHUNG J. GU et al.** *Multi-Scale Wavelet Domain Residual Learning for Limited-Angle CT Reconstruction,* 04. Marz 2017
- **C. SZEGEDY et al.** *Intriguing properties of neural networks,* 19. Februar 2014
- Prior-based artifact correction (PBAC) in computed tomography. **HEUSSER THORSTEN et al.** MEDICAL PHYSICS. AIP, vol. 41
- **J. GU et al.** *Algorithmus des Maschinenlernens*
- **G.-H. CHEN et al.** Prior Image constrained compressed sensing (PICCS): A method to accurately reconstruct dynamic CT Images from highly undersampled projection data sets. *Med. Phys.,* Februar 2008, vol. 35 (2), 660